# FASCICULE DE BREVET EUROPEEN

(11) **EP 2 193 477 B1**
(45) Date de publication et mention de la délivrance du brevet: **09.12.2020**
(21) Numéro de dépôt: 08834892.5
(22) Date de dépôt: 02.10.2008
(51) Int. Cl.: G06K 9/00, G08G 5/06, B64D 45/00

(54) **PROCEDE ET SYSTEME D'AIDE AU ROULAGE D'UN AERONEF**
VERFAHREN UND SYSTEM ZUR FLUGZEUGROLLUNTERSTÜTZUNG
METHOD AND SYSTEM FOR AIRCRAFT TAXIING ASSISTANCE

(30) Priorité: 03.10.2007 FR 0706909
(43) Date de publication de la demande: 09.06.2010
(73) Titulaire: LATECOERE, 31500 Toulouse (FR)
(72) Inventeur: BOUCOURT, Gérard, F-31180 Rouffiac-Tolosan (FR)
(74) Mandataire: Junca, Eric
(86) Numéro de dépôt international: PCT/IB2008/002587
(87) Numéro de publication internationale: WO 2009/044257

(56) Documents cités:
- EP-A- 1 030 188
- EP-A- 1 837 804
- WO-A-2004/070449
- US-A- 6 163 309
- US-A1- 2005 007 386
- US-B1- 6 434 254
- SUITER J M ET AL: "Multispectral image fusion for the small aircraft transportation system" DIGITAL AVIONICS SYSTEMS CONFERENCE, 2004. DASC 04. THE 23RD SALT LAKE CITY, UT, USA 24-28 OCT. 2004, PISCATAWAY, NJ, USA,IEEE, US, vol. 1, 24 octobre 2004 (2004-10-24), pages 4.B.4-41, XP010764984 ISBN: 978-0-7803-8539-9
- Zia-Ur Rahman ET AL: "Multisensor fusion and enhancement using the Retinex image enhancement algorithm", Proceedings of SPIE, vol. 4736, 30 July 2002 (2002-07-30), pages 36-44, XP055538641, 1000 20th St. Bellingham WA 98225-6705 USA ISSN: 0277-786X, DOI: 10.1117/12.477590 ISBN: 978-1-5106-2099-5

## Description

La présente invention concerne un procédé et un système d'aide au roulage d'un aéronef.

Actuellement, le déplacement d'un aéronef au sol depuis sa zone de parking vers son point fixe avant le décollage, et son retour à sa zone de parking à la suite de l'atterrissage, sont effectués par le pilote. Celui-ci ne dispose que de moyens de contrôle visuels directs pour reconnaître la piste (bords et début de piste) et d'éventuels obstacles interdisant l'accès (véhicule par exemple).

Ainsi, une erreur humaine peut être à l'origine de certaines défaillances lors de cette phase de roulage, qui nécessite une bonne évaluation du terrain autour de l'appareil et qui peut s'avérer dangereuse. C'est pourquoi les pilotes sont demandeurs d'une aide pour le suivi de piste sur les aéroports.

Cela est d'autant plus important lorsque les conditions de visibilité sont mauvaises (brouillard, pluie, neige, etc.). En outre, ces mauvaises conditions imposent généralement une réduction du trafic aérien, ainsi que le déroutage des aéronefs sur les pistes dégagées.

Il existe donc un besoin pour l'aide au roulage par toutes conditions météorologiques entre la zone de parking et la piste de décollage.

En outre, des applications militaires peuvent être confrontées à des problématiques similaires.

Différents procédés et systèmes d'aide au roulage ont déjà été développés.

Un premier type de système met en œuvre des caméras couvrant le domaine visible et s'appuie sur des éclairages additionnels puissants pour les périodes nocturnes. Toutefois, ce type de système montre son inefficacité lorsque les conditions météorologiques sont défavorables (brouillard, pluie intense, etc.).

Un deuxième type de système connu comporte deux capteurs, placés sur l'aéronef, dont les bandes spectrales sont différentes, par exemple un capteur infrarouge et un capteur dans le domaine visible. Deux images distinctes de la piste et de son environnement peuvent ainsi être obtenues. Afin d'obtenir une unique image visible par le pilote, de la meilleure qualité possible, ce deuxième type de système prévoit de choisir une première image comme image de fond puis d'incruster sur celle-ci des fragments (pixels) de l'autre image correspondant à des obstacles tels que des balises. On obtient ainsi une unique image sur laquelle les obstacles sont bien visibles, alors qu'ils n'auraient pas été suffisamment distinguables par le pilote avec la seule première image formant l'image de fond. Toutefois, ce deuxième type de système ne permet pas d'obtenir une bonne qualité d'image pour le pilote lorsque les conditions météorologiques sont très dégradées.

US 2005/007386 A1 divulgue un système d'affichage pour faire fonctionner un appareil qui reçoit des images d'un premier capteur et d'un second capteur qui représentent l'environnement extérieur de l'appareil. Le système d'affichage est configuré pour détecter des objets en mouvement dans les images, ainsi que pour fusionner les images à un seul point de vue.

US 6 163 309 A divulgue un système d'imagerie de véhicule pour produire une image vidéo intégrée d'une scène autour d'un véhicule. Le système comprend des capteurs pour détecter un rayonnement dans la gamme de longueurs d'onde de 250 nm à 12 µm. Les capteurs de rayonnement transmettent des signaux à un mélangeur vidéo pour produire une image de la scène dans un ensemble d'affichage. L'ensemble d'affichage peut également incorporer des informations provenant d'un récepteur RADAR ainsi que des données de navigation.

L'invention vise à fournir un procédé et un système d'aide au roulage qui ne présentent pas les inconvénients précités de l'art antérieur.

En particulier, l'invention concerne un procédé et un système d'aide au roulage permettant de fournir au pilote une image fiable, par toutes conditions météorologiques, afin de permettre au pilote de déplacer l'aéronef, à faible allure, sur les bretelles de piste jusqu'à son point fixe ou, après son atterrissage, jusqu'à sa zone de parking.

A cet effet, et selon un premier aspect, l'invention concerne un procédé selon la revendication 1.

La deuxième bande spectrale est distincte de la première et suffisamment éloignée de celle-ci pour que les deux capteurs fournissent des informations non redondantes. En outre, cela assure qu'un capteur puisse donner un signal exploitable de façon satisfaisante si l'autre capteur ne le permet pas totalement, compte tenu des conditions météorologiques notamment, ou i des conditions de luminosité (jour / nuit par exemple).

Le procédé selon l'invention prévoit donc une fusion des données des deux capteurs (au moins). Cette fusion permet d'améliorer le traitement d'image, de réduire le temps de calcul, d'augmenter le seuil de détection et les probabilités de reconnaissance, la qualité, la vitesse de décision, la capacité d'identification. En outre, la fusion évite fatigue et inconfort au pilote.

Ainsi, l'invention permet d'afficher dans le cockpit une image de qualité et fiable pour le pilote, fournissant, sur un unique écran, une information consolidée :
- sur le positionnement de l'aéronef sur les zones de roulage (visualisation de la piste, des balises, du paysage) ;
- sur la présence éventuelle d'obstacles répertoriés (engins, personnes) ;
d'où une réduction considérable des risques liés au roulage.

Par « image de fond de qualité optimale », on entend l'image qui permet la meilleure visualisation possible par le pilote. Selon les conditions, l'image de fond optimale peut être l'image donnée par l'un ou l'autre des deux signaux (avec éventuellement une optimisation de certains paramètres tels que contraste, etc.), soit une image donnée par une combinaison de ces deux signaux. En général, l'image optimale est obtenue, de jour, via un signal dans le domaine visible ou NIR (proche infrarouge) et lorsque les conditions sont dégradées (de nuit ou par brouillard par exemple), via un signal dans le domaine IR. Un arbitrage peut être opéré en fonction de la saturation. On peut ainsi avoir un signal prioritaire (conduisant à l'image de fond) et un signal complémentaire venant enrichir le signal prioritaire (par l'incrustation d'images).

La représentation graphique symbolique incrustée sur l'image de fond peut notamment comprendre un pictogramme, un texte permettant de clarifier la lecture de l'image globale pour le pilote, etc.

La première bande spectrale est dans le domaine de l'infrarouge et la deuxième bande spectrale est dans le domaine du visible.

Par exemple, la première bande spectrale s'étend de 8 à 14 µm, et de préférence de 8 à 12 µm.

Avantageusement, le procédé peut en outre comprendre l'étape consistant à acquérir au moins un troisième signal correspondant à la piste et à son environnement, par au moins des troisièmes moyens d'acquisition placés sur l'aéronef et comprenant un troisième capteur qui est complémentaire des premier et deuxième capteurs, et qui est apte à fournir une information permettant de déterminer la nature d'un éventuel élément détecté parmi différentes possibilités, à partir des signatures d'éléments appartenant à la piste ou pouvant se trouver sur la piste, dans le domaine du troisième capteur, contenues dans la base de données.

Le troisième capteur, étant complémentaire des premier et deuxième capteurs, fournit une information non redondante donc utile. L'analyse du signal fourni par le troisième capteur, en combinaison avec les signatures correspondantes contenues dans la base de données, permet de confirmer la nature de l'élément détecté ou d'opérer une discrimination par rapport à plusieurs éléments possibles.

Selon une possibilité, les troisièmes moyens d'acquisition sont conçus par réaliser l'acquisition d'un signal correspondant à la piste ou à son environnement au travers d'un nuage de gouttelettes en suspension.

Selon une réalisation possible, les troisièmes moyens d'acquisition comprennent, un radar ou/et un troisième capteur dans le domaine visible. Le radar peut permettre d'identifier un engin dont le moteur serait arrêté, et ne possédant donc pas de signature thermique; la bande spectrale du troisième capteur, dans le domaine du visible, peut s'étendre de 0,440 µm à 0,740 µm. La présence d'un capteur assurant l'acquisition de données dans le domaine visible peut s'avérer utile lorsque les conditions de visibilité sont satisfaisante.

Selon un deuxième aspect, l'invention concerne un système selon la revendication 6.

Avantageusement, les premiers et/ou deuxièmes moyens d'acquisition sont équipés d'une optique grand champ, d'au moins 80° selon la direction horizontale et 60° selon la direction verticale.

En outre, afin d'améliorer la dynamique de l'image, les premiers et/ou deuxièmes moyens d'acquisition peuvent comprendre un diaphragme mécanique (shutter) commandé par l'unité de traitement

Les premiers et/ou deuxièmes moyens d'acquisition peuvent également comporter un filtre spectral disposé en amont du capteur correspondant, afin de permettre l'acquisition de signaux sur l'ensemble de la bande spectrale dudit capteur ou sur une portion choisie de ladite bande spectrale.

Avantageusement, le système comprend en outre au moins des troisièmes moyens d'acquisition reliés à l'unité de traitement, comprenant un troisième capteur qui est complémentaire des premier et deuxième capteurs, et qui est apte à fournir un troisième signal correspondant à la piste et à son environnement et permettant de déterminer la nature d'un éventuel élément détecté parmi différentes possibilités, grâce à la base de données qui contient les signatures d'éléments appartenant à la piste ou pouvant se trouver sur la piste, dans le domaine du troisième capteur.

Le système peut en outre comporter un dispositif d'alignement des capteurs permettant d'obtenir un seul et même référentiel pour l'ensemble desdits capteurs.

Par ailleurs, l'unité de traitement peut comprendre :
- des moyens pour déterminer les propriétés du ou des éléments détectés, telles que la nature, la taille, la localisation et/ou la vitesse dudit élément ;
- et/ou des moyens d'acquisition de données propres à l'aéronef, telles que la vitesse, l'altitude et/ou la position ;
- et/ou des moyens d'amélioration de la qualité de l'image de fond et/ou des représentations graphiques symboliques du ou des éléments détectés, telles que le contraste, la luminosité, la résolution et/ou le contraste entre lesdites représentations graphiques et l'image de fond.

On décrit à présent, à titre d'exemples non limitatifs, plusieurs modes de réalisation utiles pour comprendre l'invention, en référence aux figures annexées :
La figure 1 est une représentation schématique d'un système d'aide au roulage selon un premier mode de réalisation;
La figure 2 est une représentation schématique d'un système d'aide au roulage selon un deuxième mode de réalisation; et
La figure 3 est une représentation schématique de l'image visible par le pilote, grâce au procédé et au système selon l'invention.

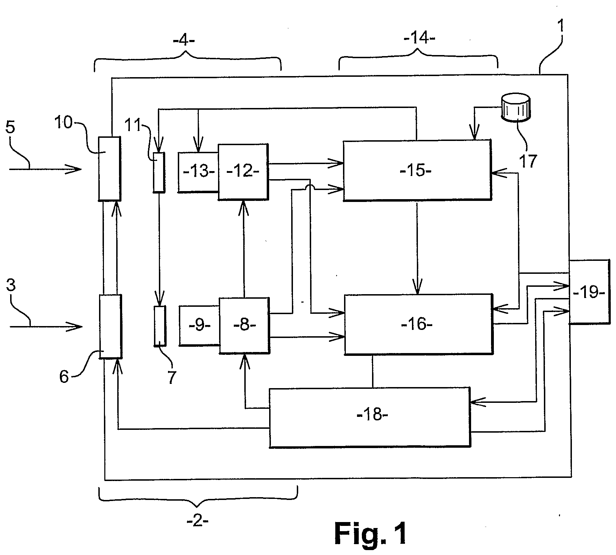

On se rapporte tout d'abord à la figure 1, qui illustre un premier mode de réalisation.

Le système d'aide au roulage est en partie logé dans un boîtier 1 interfacé sur la peau de l'aéronef, permettant :
- une installation si besoin affleurante (pour minimiser la traînée) ;
- la visée aux travers de hublots dégivrés ;
- l'installation de hublots durcis résistants à l'abrasion, aux projectiles et possédant de bonnes propriétés optiques ;
- l'installation de fenêtres pour d'éventuels capteurs complémentaires possédant de bonnes caractéristiques dans leurs bandes respectives ;
- l'adjonction de déflecteurs si nécessaire, afin d'éviter que les salissures, les insectes, les particules dans l'air ne viennent heurter les hublots ou se déposer sur ceux-ci ;
- une bonne conduction à la masse mécanique (foudre).

Le système comprend des premiers moyens d'acquisition 2 dans une première bande spectrale 3, et des deuxièmes moyens d'acquisition 4 dans une deuxième bande spectrale 5.

Les premiers moyens d'acquisition 2 comprennent un premier hublot 6 ménagé sur le boîtier 1, un filtre spectral 7, un premier capteur 8 et un premier système optique associé 9. De façon similaire, les deuxièmes moyens d'acquisition 4 comprennent un deuxième hublot 10 ménagé sur le boîtier 1, un filtre spectral 11, un deuxième capteur 12 et un deuxième système optique associé 13.

La première bande spectrale 3 est ici dans le domaine IR, par exemple avec une exploitation entre 8 et 12 µm grâce au filtre spectral 7, et peut notamment permettre la détection et la mesure de températures de balises (entre 680 et 1500°),en particulier de jour ; la deuxième bande spectrale 5 est ici dans le domaine NIR, par exemple avec une exploitation entre 0,8 et 1,1 µm grâce au filtre spectral 11, et peut notamment permettre la détection et la mesure de températures de pistes et d'engins sur la piste (de quelques degrés à plusieurs centaines de degrés), y compris de nuit ou par brouillard.

Dans ce cas, le premier hublot 6 est de préférence en germanium, et le deuxième hublot 10 en saphir. Le choix des matériaux est guidé par les propriétés optiques requises (coefficient de transmission dans la bande spectrale considérée), mais également par les propriétés mécaniques (résistance aux chocs, à l'abrasion) et thermiques (conduction du matériau pour la fonction dégivrage).

Le premier capteur 8 est par exemple un capteur de type bolométrique, non refroidi, le premier système optique 9 étant de préférence une caméra bolométrique, de grand champ (au moins 40°), à ouverture fixe de type germanium. Le deuxième capteur 12 est par exemple un capteur CCD. Afin de tenir les performances de résolution, le premier capteur 8 et/ou le deuxième capteur 12 peut être constitué d'un ou de plusieurs détecteurs couplés à une même optique.

Le système comprend également une unité de traitement 14, comprenant une unité d'analyse d'image 15 et une unité de visualisation 16, mélangeur et interface homme-machine.

L'unité d'analyse d'image 15 est reliée d'une part aux premiers et deuxièmes moyens d'acquisition 2, 4 et d'autre part à une base de données 17. Cette base de données 17 contient les signatures d'éléments appartenant à la piste ou pouvant se trouver sur la piste - tels que balises, engins, personnes - dans les première et deuxième bandes spectrales 3, 5 des capteurs 8, 12, ainsi qu'une représentation graphique symbolique de ces éléments.

L'unité d'analyse d'image 15 est apte à :
- acquérir les signaux issus des capteurs 8, 12 ;
- acquérir les données issues de l'aéronef (vitesse, altitude, etc.) ;
- fusionner les signaux fournis par les capteurs 8, 12 ;
- détecter les éléments de la scène ;
- corréler les données issues de la détection avec celles de la base de données 17 ;
- confirmer la détection d'éléments de la scène ;
- déterminer les attributs des différents éléments de la scène (localisation objet, taille objet, type d'objet, vitesse objet, etc.) ;
- analyser parmi les capteurs 8, 12, celui qui en fonction des conditions météorologiques et/ou de luminosité permettra de déterminer le fond d'image optimal ou une combinaison optimale des images issues des différents capteurs.

En outre, l'unité d'analyse d'image 15 peut commander, via un moteur, un diaphragme mécanique (shutter) prévu dans le ou les systèmes optiques 9, 13. L'unité d'analyse d'image 15 peut également commander le ou les filtre spectraux 7, 11. Ces filtres contenant une ou plusieurs plages de longueurs d'onde, il est ainsi possible de réaliser des acquisitions dans différentes sous bandes du capteur concerné ou, en position commutée, sur toute la bande spectrale.

L'unité de visualisation 16 est reliée d'une part aux premiers et deuxièmes moyens d'acquisition 2, 4 et d'autre part à l'unité d'analyse d'image 15. L'unité de visualisation 16 est apte à :
- acquérir les attributs des différents éléments de la scène ;
- acquérir les données aéronef ;
- acquérir le choix de l'image de fond à afficher ;
- améliorer l'image de fond (contraste, luminosité, résolution) ;
- améliorer l'image des objets incrustés (contraste, luminosité, résolution intrinsèque et par rapport à l'image de fond) ;
- si nécessaire superposer des symboles, des libellés permettant de clarifier la lecture des images ;
- si nécessaire réaliser une analyse dynamique des différents éléments de la scène et l'affichage associé (danger et nature du danger) ;
- émettre un signal permettant d'afficher sur une visualisation (existante ou dédiée à l'application) les images ainsi construites.

Ainsi, de façon résumée, l'unité d'analyse d'image 15 permet la fusion des signaux issus des deux moyens d'acquisition 2, 4 et l'unité de visualisation 16 permet de réaliser la meilleure visualisation possible pour le pilote. Selon l'application, les unités d'analyse d'image 15 et de visualisation 16 peuvent être dissociées ou intégrées au sein d'une même unité. De préférence, ces unités 15, 16 travaillent en temps réel.

Le système comprend de plus un module 18 d'alimentation, gestion du BITE, du dégivrage et du réchauffage, ainsi qu'un connecteur équipement 19. Peut également être prévu un dispositif de santé équipement permettant de déterminer les éléments défectueux.

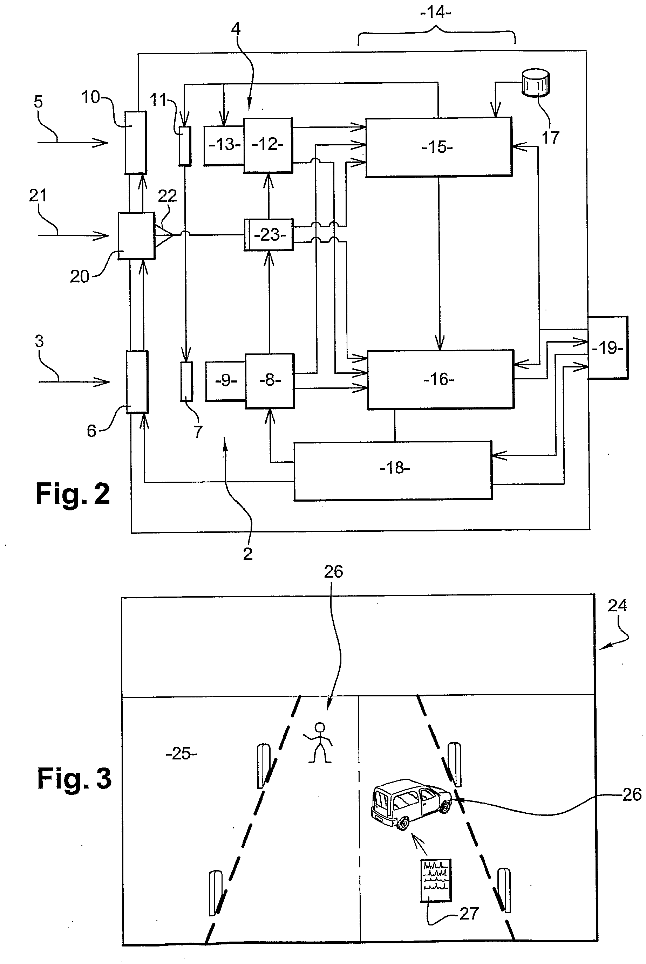

On se rapporte à présent à la figure 2, qui illustre un deuxième mode de réalisation.

On trouve dans le boîtier 1, en plus des composants décrits en relation avec la figure 1, des troisièmes moyens d'acquisition comportant un troisième capteur 20, apte à détecter un troisième type d'informations 21. Il peut par exemple s'agir d'un radar connecté, via une antenne 22, à un filtre spectral 23. En variante, il peut s'agir d'un capteur IR avec le système optique associé.

Dans ce deuxième mode de réalisation, l'unité d'analyse d'image 15 et l'unité de visualisation 16 sont également reliées aux troisièmes moyens d'acquisition, et l'unité d'analyse d'image 15 est apte à acquérir les données issues des trois capteurs 8, 12, 20.

La fusion et l'enrichissement des images sont réalisées par la complémentarité des capteurs 8, 12, 20, le traitement séparé puis conjoint des signaux afin d'optimiser la restitution pour le pilote.

Les principales étapes du traitement des signaux et de la reconnaissance automatique sont les suivants :
- un filtrage en amont (spatial, temporel, spectral) ;
- la détection et la segmentation, afin d'extraire des objets comme des formes connexes ou des régions plus ou moins homogènes, l'extraction d'attributs pour caractériser les objets segmentés ;
- une phase de filtrage et de confirmation ou de rejet de balises, fournissant des probabilités de reconnaissance ;
- une phase de gestion de l'interface homme-machine, avec formation de l'image de sortie (visible par le pilote), avec gestion de la dynamique d'affichage afin de rendre la vision plus confortable pour le pilote, et insertion de symboles.

L'obtention d'une bonne image aux yeux du pilote passe par une étape de restauration, qui a pour but de compenser les défauts inhérents au capteur ou aux conditions de prise de vue, et donc de former une image aussi fidèle que possible de la signature de l'objet observé. Les traitements d'amélioration d'image permettent de compenser les inhomogénéités de gain et d'offset entre les différents pixels d'un senseur, les bruits d'un détecteur et de l'électronique analogique, les fonctions de transfert spatiales (optique, capteurs).

La figure 3 représente schématiquement l'image 24 visible par le pilote à l'issue des étapes d'acquisition des signaux et de traitement de ceux-ci. L'image 24 comporte :
- d'une part une image de fond 25, correspondant à l'image de la meilleure qualité possible, obtenue à partir de l'un ou l'autre des signaux issus des premier et deuxième capteurs 8, 12 ou d'une combinaison de ces signaux, selon les conditions ;
- d'autre part, le cas échéant, en incrustation sur l'image de fond 25, la représentation graphique symbolique 26 du ou des éléments appartenant à la piste ou pouvant se trouver sur la piste - tels que balises, engins, personnes, bâtiment, bretelle d'accès, etc. Eventuellement, la représentation graphique symbolique 26 peut inclure un texte explicatif 27 rendant l'interprétation de l'image 24 plus aisée pour le pilote.

Les performances du système selon l'invention sont les suivantes :
- portée supérieure à 300 m ;
- grande couverture angulaire (80° en horizontal et 60° en vertical) ;
- visualisation en temps réel (par exemple 30 images par seconde) ;
- fort contraste de la restitution des objets par rapport à la piste, d'où un réel confort pour le pilote (si besoin avec une aide graphique complémentaire) ;
- excellente reconnaissance des balises et des engins quelles que soient les conditions météorologiques.

Le système et le procédé selon l'invention ne nécessitent pas d'infrastructures particulières sur la piste, et peuvent donc peut être utilisés dans tous les aéroports existants, immédiatement et sans surcoût notable. La mise en place sur l'aéronef n'impose pas non plus d'aménagements complexes. Il est toutefois avantageux de réaliser un montage aérodynamique sur le fuselage de l'aéronef, contrairement aux dispositifs connus qui sont engendrent des traînées importantes et donc une consommation accrue.

Parmi les autres avantages de l'invention, on peut citer :
- un gain substantiel en termes de sûreté du transport aérien par l'identification visuelle, par tout temps, des bretelles d'accès, des bâtiments et des zones de parking, et une amélioration importante de la sécurité des plaques tournantes (« hub ») où la circulation des véhicules et des personnes est intense ;
- une amélioration directe de la conduite au sol, et la sauvegarde des biens et des personnes, d'où une autonomie de déplacement au sol qui est particulièrement appréciable.

Il est également à noter que la mis en place du système selon l'invention peut être intégré dans l'architecture générale d'un avion sans aménagements complexes.

On notera que le procédé et le système selon l'invention peuvent également permettre l'aide pour toute phase d'utilisation d'un aéronef et notamment les phases de décollage et d'atterrissage.

## Revendications

1. Procédé d'aide au roulage d'un aéronef, le procédé comprenant les étapes suivantes :
- acquérir un premier signal correspondant à la piste et à son environnement, par des premiers moyens d'acquisition (2) placés sur l'aéronef et comprenant un premier capteur (8) dans une première bande spectrale dans le domaine de l'infrarouge ;
- acquérir un deuxième signal correspondant à ladite piste et audit environnement, par des deuxièmes moyens d'acquisition (4) placés sur l'aéronef et comprenant un deuxième capteur (12) dans une deuxième bande spectrale dans le domaine du visible, ladite deuxième bande spectrale étant distincte et suffisamment éloignée de la première pour que les deux capteurs fournissent des informations non redondantes ;
- prévoir une base de données (17) contenant les signatures d'éléments appartenant à la piste ou pouvant se trouver sur la piste dans les première et deuxième bandes spectrales des capteurs (8, 12), ainsi qu'une représentation graphique symbolique de ces éléments ;
- analyser, par une unité de traitement, les premier et deuxième signaux acquis, et, en fonction des résultats de cette analyse, générer, sur un écran visible par le pilote, une image de fond (25) de qualité optimale, l'analyse déterminant la construction de l'image de fond à partir de l'un desdits signaux ou d'une combinaison desdits signaux, en fonction des conditions de luminosité et/ou météorologiques ;
- détecter, à partir des premier et/ou deuxième signaux et par corrélation avec les signatures contenues dans la base de données (17), la présence éventuelle sur la piste d'un ou de plusieurs éléments ;
- incruster sur l'image de fond (25), sur l'écran, la représentation graphique symbolique (26) du ou des éléments détectés.

2. Procédé selon la revendication 1, dans lequel la première bande spectrale s'étend de 8 à 14 µm.

3. Procédé selon l'une des revendications 1 ou 2, comprenant en outre une étape consistant à acquérir au moins un troisième signal correspondant à la piste et à son environnement, par au moins des troisièmes moyens d'acquisition placés sur l'aéronef et comprenant un troisième capteur (20) qui est complémentaire des premier et deuxième capteurs (8, 12), et qui est apte à fournir une information permettant de déterminer la nature d'un éventuel élément détecté parmi différentes possibilités, à partir des signatures d'éléments appartenant à la piste ou pouvant se trouver sur la piste, dans le domaine du troisième capteur (20), contenues dans la base de données (17).

4. Procédé selon la revendication 3, dans lequel les au moins troisièmes moyens d'acquisition sont conçus pour réaliser l'acquisition d'un signal correspondant à la piste ou à son environnement au travers d'un nuage de gouttelettes en suspension.

5. Procédé selon l'une des revendications 3 ou 4, dans lequel les troisièmes moyens d'acquisition comprennent un radar.

6. Système d'aide au roulage d'un aéronef, destiné à être placé sur un aéronef, le système comprenant:
- des premiers moyens d'acquisition (2) comprenant un premier capteur (8) dans une première bande spectrale dans le domaine de l'infrarouge, aptes à fournir un premier signal correspondant à la piste et à son environnement ;
- des deuxièmes moyens d'acquisition (4) comprenant un deuxième capteur (12) dans une deuxième bande spectrale dans le domaine du visible, ladite deuxième bande spectrale étant suffisamment éloignée de la première pour que les deux capteurs fournissent des informations non redondantes, ces deuxièmes moyens d'acquisition étant aptes à fournir un deuxième signal correspondant à ladite piste et audit environnement ;
- une base de données (17) contenant les signatures d'éléments appartenant à la piste ou pouvant se trouver sur la piste dans les première et deuxième bandes spectrales des capteurs (8, 12), ainsi qu'une représentation graphique symbolique de ces éléments ;
- une unité de traitement (14) reliée aux premiers et deuxièmes moyens d'acquisition (2, 4) et à la base de données (17), apte à :
- acquérir les premier et deuxième signaux ;
- analyser les premier et deuxième signaux acquis et, en fonction des résultats de cette analyse, générer, sur un écran visible par le pilote, une image de fond (25) de qualité optimale construite à partir de l'un desdits signaux ou d'une combinaison desdits signaux en fonction des conditions de luminosité et/ou météorologiques ;
- détecter, à partir des premier et/ou deuxième signaux et par corrélation avec les signatures contenues dans la base de données (17), la présence éventuelle sur la piste d'un ou de plusieurs éléments ;
- incruster sur l'image de fond (25), sur l'écran, la représentation graphique symbolique (26) du ou des éléments détectés.

7. Système selon la revendication 6, dans lequel les premiers et/ou deuxièmes moyens d'acquisition sont équipés d'une optique grand champ, d'au moins 80° selon la direction horizontale et 60° selon la direction verticale.

8. Système selon l'une des revendications 6 ou 7, dans lequel les premiers et/ou deuxièmes moyens d'acquisition comprennent un diaphragme mécanique commandé par l'unité de traitement (14), afin d'améliorer la dynamique de l'image.

9. Système selon l'une des revendications 6 à 8, dans lequel les premiers et/ou deuxièmes moyens d'acquisition comprennent un filtre spectral (7, 11) disposé en amont du capteur (8, 12) correspondant, afin de permettre l'acquisition de signaux sur l'ensemble de la bande spectrale dudit capteur ou sur une portion choisie de ladite bande spectrale.

10. Système selon l'une des revendications 6 à 9, comprenant en outre au moins des troisièmes moyens d'acquisition reliés à l'unité de traitement, comprenant un troisième capteur (20) qui est complémentaire des premier et deuxième capteurs (8, 12), et qui est apte à fournir un troisième signal correspondant à la piste et à son environnement et permettant de déterminer la nature d'un éventuel élément détecté parmi différentes possibilités, grâce à la base de données (17) qui contient les signatures d'éléments appartenant à la piste ou pouvant se trouver sur la piste, dans le domaine du troisième capteur (20).

11. Système selon l'une des revendications 6 à 10, comprenant un dispositif d'alignement des capteurs (8, 12, 20) permettant d'obtenir un seul et même référentiel pour l'ensemble desdits capteurs.

12. Système selon l'une des revendications 6 à 11, dans lequel l'unité de traitement (14) comprend une unité d'analyse d'image (15) et une unité de visualisation (16).

13. Système selon la revendication 12, dans lequel l'unité d'analyse d'image (15) et l'unité de visualisation (16) travaillent en temps réel.

14. Système selon l'une des revendications 6 à 13, dans lequel l'unité de traitement (14) comprend des moyens pour déterminer les propriétés du ou des éléments détectés, à savoir nature, taille, localisation et/ou vitesse dudit élément.

15. Système selon l'une des revendications 6 à 14, dans lequel l'unité de traitement (14) comprend des moyens d'acquisition de données propres à l'aéronef, à savoir vitesse, altitude et/ou position.

16. Système selon l'une des revendications 6 à 15, dans lequel l'unité de traitement (14) comprend des moyens d'amélioration de la qualité de l'image de fond (25) et/ou des représentations graphiques symboliques (26) du ou des éléments détectés, à savoir contraste, luminosité, résolution et/ou contraste entre lesdites représentations graphiques et l'image de fond.

## Patentansprüche

1. Verfahren zur Rollunterstützung eines Luftfahrzeugs, das Verfahren umfassend die folgenden Schritte:
- Erfassen eines ersten Signals, das der Bahn und deren Umgebung entspricht, durch erste Erfassungsmittel (2), die am Luftfahrzeug angebracht sind und einen ersten Sensor (8) in einem ersten Spektralband im Infrarotbereich umfassen;
- Erfassen eines zweiten Signals, das der Bahn und deren Umgebung entspricht, durch zweite Erfassungsmittel (4), die an dem Luftfahrzeug angebracht sind und einen zweiten Sensor (12) in einem zweiten Spektralband im sichtbaren Bereich umfassen, wobei das zweite Spektralband vom ersten verschieden und ausreichend entfernt ist, damit die zwei Sensoren nicht-redundante Informationen bereitstellen;
- Vorsehen einer Datenbank (17), die die Signaturen von Elementen, die zu der Bahn gehören oder sich auf der Bahn befinden können, im ersten und zweiten Spektralband der Sensoren (8, 12), sowie eine symbolische graphische Darstellung dieser Elemente enthält;
- Analysieren, durch eine Verarbeitungseinheit, des erfassten ersten und zweiten Signals, und, je nach den Ergebnissen dieser Analyse, Erzeugen, auf einem Bildschirm, der für den Piloten sichtbar ist, eines Hintergrundbilds (25) optimaler Qualität, wobei die Analyse den Aufbau des Hintergrundbilds anhand eines der Signale oder einer Kombination der Signale in Abhängigkeit von den Helligkeits- und/oder Wetterbedingungen bestimmt;
- Detektieren, anhand des ersten und/oder zweiten Signals und durch Korrelation mit den Signalen, die in der Datenbank (17) enthalten sind, des eventuellen Vorhandenseins eines oder mehrerer Elemente auf der Bahn;
- Aufsetzen der symbolischen graphischen Darstellung (26) des oder der detektierten Elemente auf das Hintergrundbild (25) auf dem Bildschirm.

2. Verfahren nach Anspruch 1, wobei sich das erste Spektralband von 8 bis 14 µm erstreckt.

3. Verfahren nach einem der Ansprüche 1 oder 2, ferner umfassend einen Schritt, der darin besteht, mindestens ein drittes Signal, das der Bahn und deren Umgebung entspricht, durch wenigstens dritte Erfassungsmittel zu erfassen, die am Luftfahrzeug angebracht sind und einen dritten Sensor (20) umfassen, der den ersten und zweiten Sensor (8, 12) ergänzt und der geeignet ist, eine Information bereitzustellen, die es gestattet, die Art eines eventuellen detektierten Elements aus verschiedenen Möglichkeiten anhand der Signaturen von Elementen, die zu der Bahn gehören oder sich auf der Bahn im Bereich des dritten Sensors (20) befinden können, die in der Datenbank (17) enthalten sind, zu bestimmen.

4. Verfahren nach Anspruch 3, wobei die wenigstens dritten Erfassungsmittel ausgelegt sind, die Erfassung eines Signals, das der Bahn oder deren Umgebung entspricht, durch eine Wolke aus schwebenden Tröpfchen durchzuführen.

5. Verfahren nach einem der Ansprüche 3 oder 4, wobei die dritten Erfassungsmittel ein Radar umfassen.

6. Rollunterstützungssystem eines Luftfahrzeugs, das dazu bestimmt ist, an einem Luftfahrzeug angebracht zu sein, das System umfassend:
- erste Erfassungsmittel (2), die einen ersten Sensor (8) in einem ersten Spektralband im Infrarotbereich umfassen, die geeignet sind, ein erstes Signal bereitzustellen, das der Bahn und deren Umgebung entspricht;
- zweite Erfassungsmittel (4), die einen zweiten Sensor (12) in einem zweiten Spektralband im sichtbaren Bereich umfassen, wobei das zweite Spektralband vom ersten ausreichend entfernt ist, damit die zwei Sensoren nicht-redundante Informationen bereitstellen, wobei diese zweiten Erfassungsmittel geeignet sind, ein zweites Signal bereitzustellen, das der Bahn und der Umgebung entspricht;
- eine Datenbank (17), die die Signaturen von Elementen, die zu der Bahn gehören oder sich auf der Bahn befinden können, im ersten und zweiten Spektralband der Sensoren (8, 12), sowie eine symbolische graphische Darstellung dieser Elemente enthält;
- eine Verarbeitungseinheit (14), die mit dem ersten und zweiten Erfassungsmittel (2, 4) und der Datenbank (17) verbunden ist, die geeignet ist:
- das erste und zweite Signal zu erfassen;
- das erfasste erste und zweite Signals zu analysieren, und, je nach den Ergebnissen dieser Analyse, auf einem Bildschirm, der für den Piloten sichtbar ist, ein Hintergrundbilds (25) optimaler Qualität zu erzeugen, das anhand eines der Signale oder einer Kombination der Signale in Abhängigkeit von den Helligkeits- und/oder Wetterbedingungen aufgebaut ist;
- anhand des ersten und/oder zweiten Signals und durch Korrelation mit den Signalen, die in der Datenbank (17) enthalten sind, das eventuelle Vorhandensein eines oder mehrerer Elemente auf der Bahn zu detektieren;
- die symbolische graphische Darstellung (26) des oder der detektierten Elemente auf das Hintergrundbild (25) auf dem Bildschirm aufzusetzen.

7. System nach Anspruch 6, wobei die ersten und/oder zweiten Erfassungsmittel mit einer Weitwinkeloptik von mindestens 80° in der horizontalen Richtung und 60° in der vertikalen Richtung ausgerüstet sind.

8. System nach einem der Ansprüche 6 oder 7, wobei die ersten und/oder zweiten Erfassungsmittel ein mechanisches Diaphragma umfassen, das von der Verarbeitungseinheit (14) gesteuert wird, um die Dynamik des Bilds zu verbessern.

9. System nach einem der Ansprüche 6 bis 8, wobei die ersten und/oder zweiten Erfassungsmittel einen Spektralfilter (7, 11) umfassen, der dem entsprechenden Sensor (8, 12) vorgeschaltet ist, um die Erfassung von Signalen auf dem gesamten Spektralband des Sensors oder einem ausgewählten Abschnitt des Spektralbands zu gestatten.

10. System nach einem der Ansprüche 6 bis 9, ferner umfassend wenigstens dritte Erfassungsmittel, die mit der Verarbeitungseinheit verbunden sind, die einen dritten Sensor (20) umfassen, der den ersten und zweiten Sensor (8, 12) ergänzt und der geeignet ist, ein drittes Signal bereitzustellen, das der Bahn und deren Umgebung entspricht und es gestattet, die Art eines eventuellen detektierten Elements aus verschiedenen Möglichkeiten dank der Datenbank (17), die die Signaturen von Elementen enthält, die zu der Bahn gehören oder sich auf der Bahn im Bereich des dritten Sensors (20) befinden können, zu bestimmen.

11. System nach einem der Ansprüche 6 bis 10, umfassend eine Vorrichtung zur Ausrichtung der Sensoren (8, 12, 20), die es gestattet, ein und dasselbe Bezugssystem für die Gesamtheit der Sensoren zu erhalten.

12. System nach einem der Ansprüche 6 bis 11, wobei die Verarbeitungseinheit (14) eine Bildanalyseeinheit (15) und eine Visualisierungseinheit (16) umfasst.

13. System nach Anspruch 12, wobei die Bildanalyseeinheit (15) und die Visualisierungseinheit (16) in Echtzeit arbeiten.

14. System nach einem der Ansprüche 6 bis 13, wobei die Verarbeitungseinheit (14) Mittel zum Bestimmen der Eigenschaften des oder der detektierten Elemente umfasst, und zwar der Art, Größe, Lokalisierung und/oder Geschwindigkeit des Elements.

15. System nach einem der Ansprüche 6 bis 14, wobei die Verarbeitungseinheit (14) Mittel zur Erfassung von Daten umfasst, die dem Luftfahrzeug eigen sind, und zwar Geschwindigkeit, Höhe und/oder Position.

16. System nach einem der Ansprüche 6 bis 15, wobei die Verarbeitungseinheit (14) Mittel zur Verbesserung der Qualität des Hintergrundbilds (25) und/oder der symbolischen graphischen Darstellungen (26) des oder der detektierten Elemente umfasst, und zwar Kontrast, Helligkeit, Auflösung und/oder Kontrast zwischen den grafischen Darstellungen und dem Hintergrundbild.

## Claims

1. Method for aircraft taxiing assistance, the method comprising the following steps:
- acquiring a first signal corresponding to the runway and to its environment, by first acquisition means (2) placed on the aircraft and comprising a first sensor (8) in a first spectral band in the infrared range;
- acquiring a second signal corresponding to said runway and to said environment, by second acquisition means (4) placed on the aircraft and comprising a second sensor (12) in a second spectral band in the visible range, said second spectral band being distinct and sufficiently far from the first for the two sensors to provide nonredundant information;
- providing a database (17) containing the signatures of elements which belong to the runway or are potentially located on the runway in the first and second spectral bands of the sensors (8, 12), and a symbolic graphical representation of these elements;
- analysing, by means of a processing unit, the first and second signals acquired and, based on the results of this analysis, generating, on a screen that can be seen by the pilot, a background image (25) of optimum quality, the analysis determining the construction of the background image from one of said signals or from a combination of said signals, depending on the brightness and/or weather conditions;
- detecting the possible presence on the runway of one or more elements from the first and/or second signals and by correlation with the signatures contained in the database (17);
- inlaying on the background image (25), on the screen, the symbolic graphical representation (26) of the detected element(s).

2. Method according to Claim 1, in which the first spectral band extends from 8 to 14 µm.

3. Method according to either of Claims 1 and 2, also comprising a step consisting of acquiring at least one third signal corresponding to the runway and to its environment, by at least third acquisition means placed on the aircraft and comprising a third sensor (20) which complements the first and second sensors (8, 12) and which is able to supply information for determining the nature of a possible element detected from among various possibilities, on the basis of the signatures of elements which belong to the runway or are potentially located on the runway, in the range of the third sensor (20), and are contained in the database (17) .

4. Method according to Claim 3, in which the at least third acquisition means are designed to acquire a signal corresponding to the runway or to its environment through a cloud of suspended droplets.

5. Method according to one of Claims 3 and 4, in which the third acquisition means comprise a radar.

6. System for aircraft taxiing assistance intended to be placed on an aircraft, the system comprising:
- first acquisition means (2) which comprise a first sensor (8) in a first spectral band in the infrared range and are able to supply a first signal corresponding to the runway and to its environment;
- second acquisition means (4) which comprise a second sensor (12) in a second spectral band in the visible range, said second spectral band being sufficiently far from the first for the two sensors to provide nonredundant information, these second acquisition means being able to supply a second signal corresponding to said runway and to said environment;
- a database (17) containing the signatures of elements which belong to the runway or are potentially located on the runway in the first and second spectral bands of the sensors (8, 12), and a symbolic graphical representation of these elements;
- a processing unit (14) connected to the first and second acquisition means (2, 4) and to the database (17) and able to:
- acquire the first and second signals;
- analyze the first and second signals acquired and, based on the results of this analysis, generate, on a screen that can be seen by the pilot, a background image (25) of optimum quality constructed from one of said signals or from a combination of said signals, depending on the brightness and/or weather conditions;
- detect the possible presence on the runway of one or more elements from the first and/or second signals and by correlation with the signatures contained in the database (17);
- inlay on the background image (25), on the screen, the symbolic graphical representation (26) of the detected element(s).

7. System according to Claim 6, in which the first and/or second acquisition means are equipped with a wide field optic of at least 80° in the horizontal direction and 60° in the vertical direction.

8. System according to one of Claims 6 and 7, in which the first and/or second acquisition means comprise a shutter controlled by the processing unit (14), in order to enhance the dynamics of the image.

9. System according to one of Claims 6 to 8, in which the first and/or second acquisition means comprise a spectral filter (7, 11) arranged upstream of the corresponding sensor (8, 12) in order to enable the acquisition of signals over the entire spectral band of said sensor or over a selected portion of said spectral band.

10. System according to one of Claims 6 to 9, also comprising at least third acquisition means connected to the processing unit, comprising a third sensor (20) which complements the first and second sensors (8, 12) and which is able to supply a third signal corresponding to the runway and to its environment and making it possible to determine the nature of a possible element detected from among various possibilities by virtue of the database (17) which contains the signatures of elements which belong to the runway or are potentially located on the runway, in the range of the third sensor (20).

11. System according to one of Claims 6 to 10, comprising a device for aligning the sensors (8, 12, 20) that makes it possible to obtain one and the same frame of reference for all of said sensors.

12. System according to one of Claims 6 to 11, in which the processing unit (14) comprises an image analysis unit (15) and a visualization unit (16).

13. System according to Claim 12, in which the image analysis unit (15) and the visualization unit (16) work in real time.

14. System according to one of Claims 6 to 13, in which the processing unit (14) comprises means for determining the properties of the detected element(s), such as the nature, the size, the location and/or the speed of said element.

15. System according to one of Claims 6 to 14, in which the processing unit (14) comprises means of acquiring data specific to the aircraft, such as the speed, altitude and/or position.

16. System according to one of Claims 6 to 15, in which the processing unit (14) comprises means of enhancing the quality of the background image (25) and/or of the symbolic graphical representations (26) of the detected element (s), such as the contrast, the brightness, the resolution and/or the contrast between said graphical representations and the background image.
